# EUROPEAN PATENT APPLICATION

(11) **EP 1 213 914 A1**
(43) Date of publication of application: **12.06.2002**
(21) Application number: 00830809.0
(22) Date of filing: 07.12.2000
(51) Int. Cl.: H04N 5/00, H04N 5/44

(54) **Data collector, particularly for interactive television systems**

(71) Applicant: e-Seed Telecommunications S.p.A., 20144 Milano (IT)
(72) Inventor: Bottigelli, William, 29100 Piacenza (IT); Giuliani, Ivo, 00188 Roma (IT)

(57) **Abstract**

A data collector is disclosed, including a central processor (CPU) to which a telephone interface unit (TELEPHONE INTERFACE) is connected, connected in turn to a user telephone line. The above mentioned telephone interface is configured in order to modify the value of a *byte* when the user hangs off the handset of the telephone set connected to said user line.

Said modified *byte* is read by the central processor (CPU) as a *byte* coming from the parallel port and in response to this reading the central processor (CPU) determines the switching on of the television set.

Thanks to the invention enabling the switching on of the television set when the user unhooks the telephone set, it is possible to display on the television set (TV) advertisement spots which are thus seen only by the calling user. These advertising spots therefore do not interfere in any way with the called telephone user, contrarily to what happens in the systems of the known type in which the crediting of conversation minutes to the calling user has repercussions also on the called user. (Fig. 1)

## Description

### Field of the Invention

The present invention relates in a wider sense to interactive television systems and, in particular, it relates to a data collector, connected to a user telephone line, fitted with means suitable to activate a specific output when the user hangs off the handset of his or her telephone set connected to said user line.

### Background art

EP 694244 in the name of Italtel S.p.A. discloses an interactive television system allowing the user to participate in television programs such as quizzes, advertising spots, polls, etc., in which each user station includes a television receiver, a set top box connected to said television receiver and capable to decode the messages broadcast together with the video signal, and to display them overprinted on the television set, an infrared remote control with four driving keys, and a direct and automatic access device to the telephone line, connected at radio frequency to said set top box.

In particular, the above mentioned system foresees the presence of a TV program distributor connected to a broadcaster, or better to a TV service centre equipped with a Teletext system (TTX) irradiating TV images and TTX data. A generic system user has a user set capable of detecting and decoding TTX messages and of showing, overprinted on the TV screen, suitable templates which guide him or her in the participation in the interactive TV event.

The user sets, spread over the territory are connected to a service centre through the telephone network. Finally, the information collected is transmitted from the service centres to a coordination station of interactive television events installed at the concerned TV broadcaster employing dedicated and/or public data networks. From the co-ordination station it is possible to address new information towards the user sets for the communication of the results of the participation in the interactive event.

The set top box used in the above mentioned system is therefore suitable to send the user interactions to a service center, through the telephone network, but it is not suitable to be used in systems foreseeing credits of free conversation minutes to a telephone user against his or her availability to receive advertising spots.

In fact, these systems of the known art usually foresee that the user calls a central station and notifies it the number of the telephone user with whom he or she intends to establish the call. The central station sends then both to the calling user and to the called one some advertising spots and makes the necessary provisions to charge, wholly or in part, the costs related to the subject telephone call to the service operator.

However, this system has the drawback that also the called user, who has not declared any intention of receiving the advertising spots, is actually compelled to receive unsolicited spots.

Therefore, data collector of the known type are not suitable for use in systems foreseeing, for instance, to grant the calling user minutes of free telephone conversation without involving also the called user.

### Scope and summary of the Invention

Scope of the present invention is therefore a data collector free from the typical drawbacks of the above mentioned sets; namely, the scope of the present invention is a data collector including a central processor to which a telephone interface is connected, connected in its turn to a user telephone line. The above mentioned telephone interface is configured in such a way as to modify some bits of a *byte* when the user hangs off the handset of the telephone set connected to the above mentioned user line.

This *byte* corresponds to the parallel port of the central processor, which, upon detection of the above mentioned modification, causes the television set to switch on.

Thanks to the invention that enables the switching on of the television set following the hanging off of the handset by the user, it is possible to display some advertising spots on the television set, which are thus only viewed by the calling user and do not interfere in any way with the telephone user called, contrarily to what happens with the systems of the known art in which the crediting of telephone conversation free minutes to the calling user has an impact also on the called user.

### Brief description of the Drawings

The features of the present invention which are believed to be novel are set forth with particularity in the appended claims. The invention together with further objects and advantages thereof, may be understood with reference to the following description, taken in conjunction with the accompanying drawings, in which:
- Figure 1 shows the architecture of the system including the invention;
- Figure 2 shows a simplified equivalent circuit of the telephone set TL shown in Figure 1;
- Figure 3 shows a preferred embodiment of the TELEPHONE INTERFACE unit in Figure 1;

### Description of a preferred embodiment of the invention

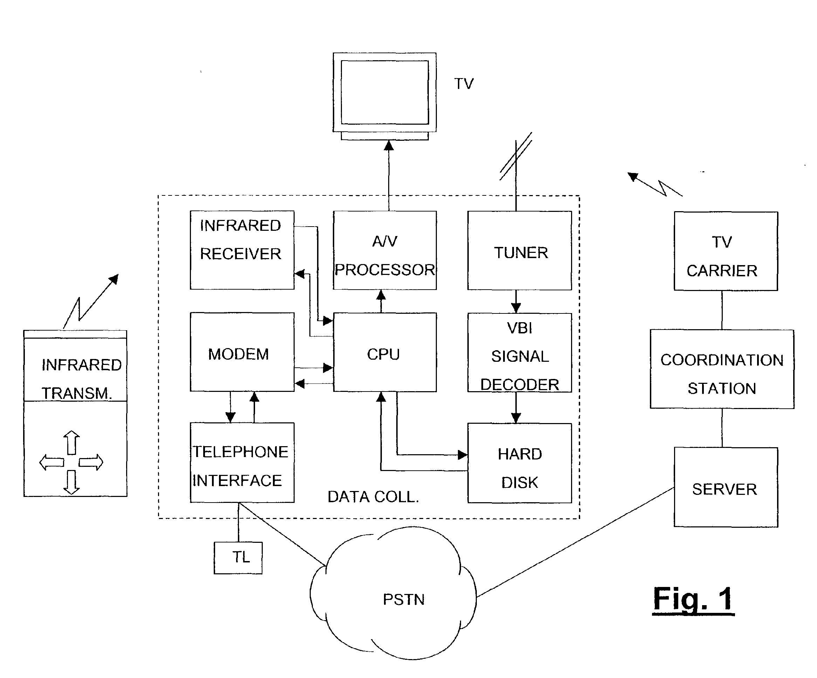

With reference to Figure 1, the system includes a television broadcast station TV CARRIER which telecasts, in addition to the usual images, a sequence of additional images allocated in VBI lines (Vertical Blanking Interval) according to the teletext transmission standard.

The system includes also a plurality of user stations, each including:
- a television set TV of the traditional type;
- a data collector DATA COLL., connected through the SCART plug to a television set TV;
- a telephone set TL connected to the data collector.
- a remote control REMOTE CONTROL fitted with navigation keys and with at least an Enter key for the data identified by means of the navigation keys.
- a central processing unit SERVER connected through the public telephone network PSTN to the data collector DATA COLL. mentioned above and having the functions of recording the interactions made by the users through the remote control REMOTE CONTROL and of dynamically profiling each individual user;
- a coordination station COORDINATION STATION representing the production station of multimedia contents destined to be sent to the users through the television broadcaster TV CARRIER.

The data collector DATA COLL. has the function to control:
1. the reception and storage of multimedia contents emitted by the broadcaster TV CARRIER;
2. the fruition and interaction with the same by the user;
3. the storage and the subsequent transmission to the central processing unit SERVER of the interactions made by the user through the remote control REMOTE CONTROL;
4. the offer of additional services to the user (customized information page, e-mail, video on demand, etc.)

To this end, the data collector DATA COLL. includes:
- a tuner TUNER suitable to receive the radio frequency signal emitted by the television broadcaster TV CARRIER;
- a signal decoder VBI or VBI SIGNAL DECODER connected to said TUNER;
- a memory element or HARD DISK connected to the VBI signal decoder;
- a central processor CPU suitable to receive the multimedia contents downloaded by the decoder VBI SIGNAL DECODER in the memory element HARD DISK and fit also to send to the memory element HARD DISK the interactions made on said multimedia contents through the remote control REMOTE CONTROL;
- an audio-video processor A/V PROCESSOR connected to the central processor CPU;
- an infrared receiver INFRARED RECEIVER connected to the central processor CPU;
- a mo-demodulation device MODEM connected through a bi-directional channel to the central processor CPU;
- a telephone interface TELEPHONE INTERFACE also connected through a bi-directional connection to the above mentioned mo-demodulation device MODEM.

The architecture mentioned above, enables the organization of a service for the transmission of multimedia contents to the users in a wide sense, and, preferably, of advertising spots through the television broadcaster TV CARRIER in order to display said advertising spots on the user television sets. The subject service intends also to make free a telephone call the user would make as a compensation for his or her availability to view the above mentioned advertising spots. Namely, the service aims to give the final user a telephone call free of charge by offering the possibility to gain conversation minutes at no cost through the interaction with the multimedia contents proposed, through the use of the television set of the user and of the home telephone line.

In particular, the above mentioned advertising spots are supplied to the co-ordination station COORDINATION STATION and then sent to the television broadcaster TV CARRIER that includes said images in a number of VBI lines (Vertical Blanking Interval) made available by the broadcaster on a pre-determined transmission frequency.

The signal emitted by the broadcaster TV CARRIER is then received by the antenna of the user station, converted in base band by the tuner TUNER and decoded by the decoder of the VBI signal, VBI SIGNAL DECODER and then stored in the memory element HARD DISK of the data collector DATA COLL..

For instance, using two VBI lines, it is possible to transfer to the above mentioned memory element HARD DISK tenths of advertising spots a day, thus accumulating some hundreds of advertising spots in a period of a few days.

According to the invention, when the user hangs off the handset of the telephone set connected to the data collector DATA COLL., this event is highlighted by the above mentioned telephone interface TELEPHONE INTERFACE, which, by means of the central processor CPU and of the audio/video processor A/V PROCESSOR, determines the switching on of the television set TV and/or its tuning on a pre-set channel, in case the TV set is already on.

After switching the television set TV on, the central processor CPU causes also some advertising spots stored in the above mentioned memory element HARD DISK to be sent to the same television set. Also according to the invention, the display of the advertising spots on the TV set is alternated with the display of prize units to the user, preferably in the form of golden tokens whose images cross the screen of the television set. If these prize units are "captured" by the user, a number of telephone conversation minutes are credited which the user will make free of charge. The above mentioned "capture" is made through the remote control REMOTE CONTROL and therefore the view of the advertising spots by the user is stimulated and rewarded with the crediting of conversation minutes.

Interactions made by the user through the remote control "REMOTE CONTROL, for instance, when capturing a prize unit, are detected by the central processor CPU receiving said interactions through the infrared receiver INFRARED RECEIVER, and stored in a temporary file of the memory element HARD DISK. Later, this temporary file is sent to the central processing unit SERVER through the public telephone network PSTN.

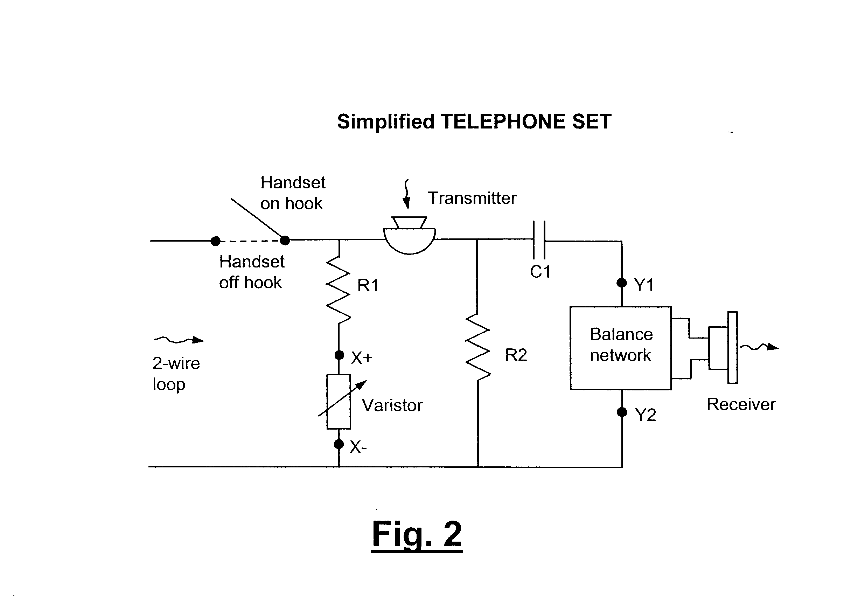

Figure 2 shows a simplified equivalent circuit of the telephone set TEL, whose meaning is only to show in concrete the concept of *hang-on* (or on-hook) and *hang-off* (or off-hook) of the handset. Making reference to figure 2, it can be noticed a 2-wire telephone loop (2-wire loop) interrupted in the upper part by an electric contact in open position, corresponding to the condition of hang on handset (hang-on). For sake of completeness, the close position of the same contact, corresponding to the condition of hang off handset (hang-off), is also indicated with a dotted line. Bridging the 2-wire loop, downstream the contact, the set of a resistor R1 with a varistor (Varistor) is installed, and on the continuation of the 2-wire loop a microphone (Transmitter) is inserted in series, followed by a resistor R2, also bridging the 2-wire loop. Downstream the resistor R2, one can notice a capacitor C1 placed in series to the 2-wire loop, followed by a balancing network terminating the 2-wire loop and supplying a receiving capsule (Receiver) with a voiceband signal. When the handset is hang off, a direct current circulates in all the elements placed upstream the capacitor C1, which decouples the circuits placed downstream from the direct current. The balancing network arid the receiving capsule are interested only in the voice band signals (300 ÷ 3.400 Hz), coming from speakers or made of the multi-frequency tones during the dialing phase.

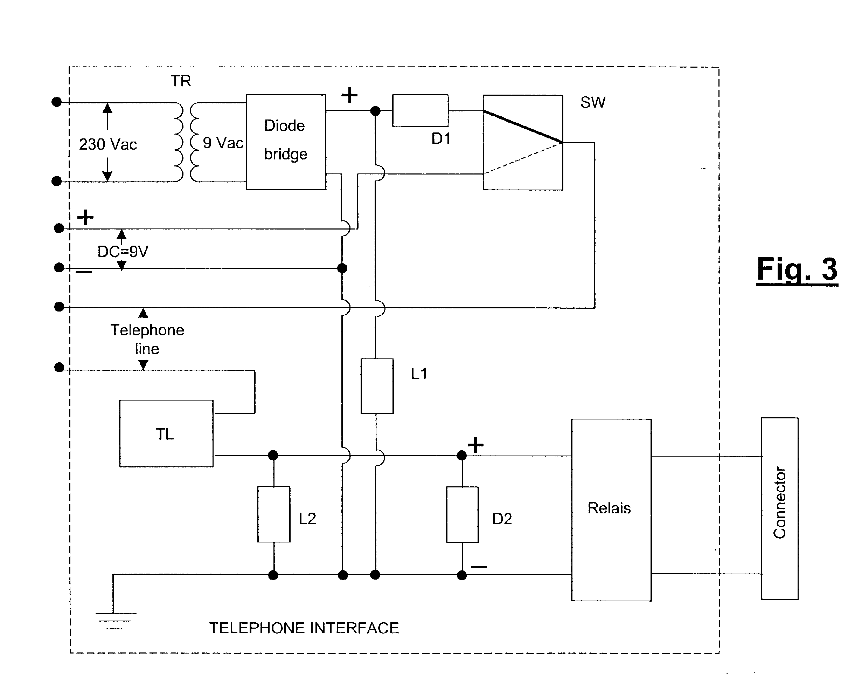

Figure 3 shows in detail the elements forming the telephone interface unit which, according to the invention, includes means suitable to detect the seizure of the telephone line by modifying according to the invention the value of a *byte* in response to said seizure and means suitable to switch the television set on whenever the central processor CPU detects the above mentioned modified *byte.*

The above mentioned means suitable to detect the engagement of the telephone line are supplied according to the invention through the 230 Vac mains voltage or through a direct current source DC=9V. In particular, the 230 Vac mains voltage reaches the input of a transformer TR whose output becomes a 9 Vac alternate voltage connected to a diode bridge *Diode bridge,* whose output showing negative polarity is connected to the negative polarity of the direct current source as well as to ground.

The output of the diode bridge showing positive polarity is connected to a lead of a first light emitting diode L1 whose other lead is connected to ground. Therefore, LED L1 lights when the subject device is powered.

The above-mentioned output of the diode bridge is also connected to an input of the single-pole double-throw switch SW through a light emitting diode D1. The switch SW receives on the second input the positive polarity of said continuous supply source DC.

The common terminal of the switch SW is connected to one of the wires of the telephone line *Telephone line* whose second wire is connected to the telephone set TL. The second wire of the 2-wire loop connected to the telephone set TL is connected to a terminal of another diode D2, whose second terminal is connected to ground. Preferably, diodes D1 and D2 are silicon diodes and have the function to avoid that the 230 Vac mains voltage damages the direct current source DC.

In parallel to diode D2 a relay *Relay* is connected the output of which corresponds to a logic level indicating the busy status (or idle) of the telephone line *Telephone line.* This status is highlighted through a second light emitting diode L2 also connected in parallel to the relay *Relay.*

Therefore, when the subject telephone interface is powered as specified above, *hang-on* and *hang-off* events, (that is the lifting and the lowering of the handset by the user, corresponding to the closing or opening of the telephone line) are intercepted by the relay *Relay* which modifies the state of its output.

In particular, the two wires of said output of the relay reach the input of a connector *Connector,* preferably of the 25-pin type, in such a way that the enabling of the output of the relay *Relay* determines the modification of the value of a *byte* which is read by the central processor CPU as a byte coming from the parallel port.

As an example, if the handset is hung off, the value of the *byte* assumes a first value (e.g. 31) while if the handset is hang on the *byte* value is equal to a second value (e.g. 15).

When the software of the central processor CPU reads *byte* 31 on the parallel port it actuates a process by which a command is sent to the television set TV which makes it switch on and tune on a pre-set channel.

Once the television set has been switched on as specified above in detail, the central processor CPU enables the display of a sequence of advertising spots previously stored in the memory unit HARD DISK on the television set TV, and alternates or superimposes prize units to said images, for instance in the form of golden tokens gliding along the screen.

The interactions made by the user to "capture" said premium units determines the generation of a temporary file, which is newly stored in the HARD DISK unit, and then transferred to the collection station COORDINATION STATION.

Therefore, while a preferred embodiment of the present invention has been shown and described, it should be understood that the present invention is not limited thereto since other embodiments may be made by those skilled in the art without departing from the scope thereof. It is thus contemplated that the present invention encompasses any and all such embodiments covered by the following claims.

Said alternative embodiments could for instance foresee transmission means of the advertising spots according to methods other than the VBI one described above.

For instance, these transmission means could conveniently be satellite broadcast or of the telephone type, known in the specific technique under the acronym xDSL which defines a family of processing techniques of telephone signals referable to a general concept of Digital Subscriber Line.

## Claims

1. Data collector, particularly for interactive television systems, including:
• a central processor (CPU),
• a telephone interface (TELEPHONE INTERFACE) connected to the central processor through a mo-demodulation equipment (MODEM) and also connected to the public telephone network (PSTN) through a telephone line;
• an infrared receiver (INFRARED RECEIVER) adapted to receive the selections made by the user by means of a remote control (REMOTE CONTROL);
• an audio/video processor (A/V PROCESSOR) connected to said central processor (CPU) and to a television set (TV);
• a tuner (TUNER) suitable to convert into base band the video signal received through an antenna;
• a memory element (HARD DISK) connected to said tuner and to said central processor,
**characterized in that** said telephone interface (TELEPHONE INTERFACE) includes means adapted to:
• modify the value of a *byte* in response to the seizure of the telephone line by the user;
• make available said modified *byte* on the parallel port of said central processor (CPU),
• make the television set switch on and tune on a pre-set channel upon detection of said modified byte by the central processor (CPU)

2. Data collector according to claim 1, **characterized in that** said modified *byte* is available on a connector (*Connector*) having two terminals connected to the output terminals of a relay (*Relay*), one of the input terminals of the relay being connected to ground while the other terminal being connected to a power supply through the telephone set (TL) and the user telephone line.

3. Data collector according to claim 2, **characterized in that** said power supply corresponds to the common terminal of a switch (SW) receiving at input a signal obtained rectifying the mains voltage (230 Vac) and at the other input a direct current power supply (DC).

4. Data collector according to any claim 1 to 3, **characterized in that** a first diode (D2) is connected in parallel to the relay (Relay)

5. Data collector according to any claim 1 to 3, **characterized in that** a second diode (D1) is connected between the mains voltage rectifying means and said switch (SW).

6. Data collector according to claims 4 and 5, **characterized in that** said first and second diodes (D1, D2) are silicon diodes.

7. Data collector according to claim 3, **characterized in that** said signal obtained rectifying the mains voltage is applied to the terminals of a first light emitting diode (L1).

8. Data collector according to claim 2, **characterized in that** a second light emitting diode (L2) is also connected in parallel to the relay (*Relay*).

9. Data collector according to claim 1, **characterized in that**, upon switching on the television set, the central processor (CPU) causes the display of images previously stored in the memory element (HARD DISK)on the television set (TV).

10. Data collector according to claim 1, **characterized in that** the central processor causes the display of prize units on the television set (TV).

11. Data collector according to claims 9 and 10, **characterized in that** the user interacts with the images displayed on the television set by means of the remote control (REMOTE CONTROL).

12. Data collector according to claim 11, **characterized in that** the user interactions are previously stored in the above mentioned memory element (HARD DISK).
